# EUROPÄISCHE PATENTSCHRIFT

(11) **EP 1 118 167 B1**
(45) Veröffentlichungstag und Bekanntmachung des Hinweises auf die Patenterteilung: **27.11.2002**
(21) Anmeldenummer: 99955823.2
(22) Anmeldetag: 28.09.1999
(51) Int. Cl.: H04B 3/58, H04B 3/54

(54) **VERFAHREN UND ANORDNUNG ZUR DATENÜBERTRAGUNG ÜBER NIEDERSPANNUNGSNETZE**
METHOD AND DEVICE FOR TRANSMITTING DATA OVER LOW-VOLTAGE NETWORKS
PROCEDE ET DISPOSITIF POUR LA TRANSMISSION DE DONNEES SUR DES RESEAUX BASSE TENSION

(30) Priorität: 01.10.1998 DE 19846151
(43) Veröffentlichungstag der Anmeldung: 25.07.2001
(73) Patentinhaber: Brandt, Frank, 12209 Berlin (DE)
(72) Erfinder: LUKANEK, Frank, D-13591 Berlin (DE); BRANDT, Frank, D-12209 Berlin (DE); SCHLEGEL, Udo, D-14089 Berlin (DE); SCHOENFELDT, Kay, D-33098 Paderborn (DE)
(74) Vertreter: Zimmermann, Gerd Heinrich
(86) Internationale Anmeldenummer: DE9903154
(87) Internationale Veröffentlichungsnummer: WO00021211

(56) Entgegenhaltungen:
- EP-A- 0 714 193
- EP-A- 0 735 700
- DE-A- 19 504 587
- GB-A- 2 293 950
- MASAO NAKAGAWA ET AL: "SPREAD SPECTRUM FOR CONSUMER COMMUNICATIONS" IEICE TRANSACTIONS,JP,INSTITUTE OF ELECTRONICS INFORMATION AND COMM. ENG. TOKYO, Bd. E74, Nr. 5, 1. Mai 1991 (1991-05-01), Seiten 1093-1102, XP000258502 ISSN: 0917-1673

## Beschreibung

Die Erfindung betrifft ein Verfahren nach dem Oberbegriff des Anspruchs 1 sowie eine Anordnung zur Durchführung des Verfahrens.

Die Energieversorgungsunternehmen verfügen über stark verzweigte Stromversorgungsnetze, über die sie mit all ihren Kunden verbunden sind. Dieser Vorteil wird bereits seit langem über die bloße Lieferung von Energie hinaus, zum Beispiel bei der Tonfrequenz-Rundsteuerung, zur Datenübertragung bei Einweg-Kommunikation genutzt, jedoch mit dem Nachteil, daß eine Rückmeldung nicht erfolgt.

In jüngerer Zeit sind jedoch auch Vorschläge unterbreitet worden, um unabhängig von anderen Netzbetreibern eine Nutzung der Niederspannungsnetze der Energieversorgungsunternehmen zur Zweigwege-Kommunikation zu ermöglichen. Während die Einwegkommunikation die bloße Erfassung von Daten, zum Beispiel Zählerstände von Strom, Gas, Wasser und dgl. Oder die Meßwerterfassung von Temperatur, Druck usw. oder die Alarmaufnahme umfaßt, ermöglicht die Zweiwege-Kommunikation auch die Abfrage von Schaltzuständen und die Steuerung komplexer technischer Einrichtung. Über die normale Datenübertragung hinaus ist das Niederspannungsnetz, mit dem die Stromversorger über eine komplette Verkabelung bis in die einzelnen Haushalte verfügen, aber auch für die normale Telefonie verwendbar. Nach einem bekannten diesbezüglichen Vorschlag müssen die das Niederspannungsnetz für die Telekommunikation nutzenden Stromversorger jedoch zum einen für als Datenfilter wirkende Einrichtungen sorgen, so daß die betreffenden Daten nur zu den Empfängern gelangen, für die sie bestimmt sind. Zum anderen sind in den Netzstationen Geräte für die Umsetzung der Daten auf ein die Stationen verbindendes Kupfer-, Funk- oder Glasfasernetz erforderlich. Bisher wird davon ausgegangen, daß an eine Netzstation 100 bis 200 Haushalte für die Stromversorgung angeschlossen werden können. Unter Einhaltung der europäischen Normung Celenec EN 50065-1 steht für die Datenkommunikation in dem festgelegten Frequenzband bis 95 kHz eine theoretisch nutzbare Datenrate für den Duplexbetrieb von max. 70 kbit/s zur Verfügung.

Aus der DE 195 04 587 A1 ist ein Zweiwege-Kommunikationssystem zur Datenübertragung zwischen einer Zentrale und Unterstationen sowie zwischen Zwischenstationen und Endverbrauchereinrichtungen bekannt. Die Zwischenstationen sind an das Niederspannungsnetz gekoppelte Knotencontroller, wobei zur Datenübertragung zwischen der Zentrale und den Unterstationen ein großflächiges Telekommunikationssystem, zum Beispiel ein Datenfunknetz oder ein leitungsgebundenes Netzwerk, insbesondere Lichtleiternetzwerk, genutzt wird. Die den Verteilnetztransformatoren zugeordneten Knotencontroller verfügen über Standardmodems als Schnittstelle zwischen dem Niederspannungsnetz und dem großflächigen Telekommunikationsnetz, während als Zwischenstation auf dem Übertragungsweg zwischen Knotencontroller und Endverbraucher-Einrichtung ein Modem mit Repeaterfunktion vorgesehen ist und die Übertragung im 10-skalen Niederspannungsnetzwerk mit einer Bandspreiztechnik durchgeführt wird.

Die Datenübertragung in Niederspannungsnetzen findet in dem in Europa zulässigen Frequenzbereich bis 148,5 kHz statt. In diesem Frequenzbereich ist aber die Übertragungsqualität zum einen durch eine Vielzahl hier auftretender Störsignale und ein starkes Rauschen eingeschränkt zum anderen durch das schmalbandige Übertragungsband hinsichtlich der Teilnehmeranzahl und der Übertragungskapazität pro Teilnehmer begrenzt.

In der älteren, jedoch nicht vorveröffentlichten Patentanmeldung DE 197 14 386.5 wird
Ein Verfahren zur Datenübertragung in Zweiweg-Kommunikation über Niederspannungsnetze, die an ein übergeordnetes Telekommunikationsnetz gekoppelt sind, offenbart.

Um gegenüber den vorbeschriebenen bekannten Systemen bei hoher Datenübertragungsrate eine Verbesserung der Übertragungsqualität und der Übertragungssicherheit in ISDN-Qualität unter Einhaltung der Echtzeit-Signalverarbeitung zu erzielen, ist vorgesehen, daß die Datenübertragung im Niederspannungsnetz in einem hochfrequenten Bereich bis 30 MHz mit einer Bandspreizurig der Datensignale und einem Sendepegel unterhalb der vorgegebenen Funk- und Leitungsstörspannungsgrenze durchgeführt wird und die zur Gewährleistung einer Mehrbenutzerstruktur mit unterschiedlichen Sequenzen einer Familie von Pseudozufallszahlen gespreizten Signale zur Vorgabe einer empfängerspezifischen logischen Richtung im Niederspannungsnetz mit einer Richtungskodierung versehen werden, wobei die jeweils nutzerspezifisch gespreizten und richtungsspezifisch gekennzeichneten binären Datenfolgen im Niederspannungsnetz in durch den Dämpfungsgrad bestimmten Abständen mit Hilfe der vorgegebenen Sequenzen durch Korrelation erkannt, regeneriert und mit einer neuen Richtungskennung für die Weiterleitung der Signale bewertet werden.

Die Funk- und Leitungsstörspannungsgrenzwerte sind in einem höheren Frequenzbereich, beispielsweise von 10 MHz, deutlich niedriger als im Frequenzbereich bis 148,5 kHz. Jedoch treten auch in diesem Bereich schmalbandige Störungen durch Oberwellen aus anderen Frequenzbereichen auf, und auch die normalen Funksender wirken sich in diesem Frequenzbereich noch störend auf die Datenübertragung aus. Andererseits dürfen aber die vorgeschriebenen, sehr niedrig liegenden maximalen Sendepegel nicht überschritten werden. Darüber hinaus kann ein mit niedrigem Pegel aufgegebenes Signal aufgrund des mit steigender Entfernung und steigender Frequenz zunehmenden Dämpfungsmaßes unter die Rauschgrenze absinken und dann als nicht gespreiztes Signal nicht mehr empfangen werden.

Wegen des niedrigen Sendepegels und der hohen Dämpfung in diesem Frequenzbereich gelangt das zu übertragende Signal bei dem älteren Verfahren bei einem Dämpfungsmaß von 50 bis 70 dB/100 m unter die Rauschgrenze, kann aber bei erdverlegten Kabeln noch nach einer Entfernung von 100 Metern unterhalb der Rauschgrenze empfangen und erfolgreich regeneriert werden. Durch eine Richtungskodierung, die mit der Code-, Zeit- oder Frequenzmultiplextechnik durchgeführt wird, kann die bei Datentransport in Niederspannungsnetzen nicht mögliche physikalische Trennung in eine logische Trennung umgesetzt werden, so daß ein Duplexbetrieb möglich ist. Außerdem ist durch die Codemultiplextechnik eine Mehrnutzerstruktur gewährleistet. Durch Anwendung der Direktsequenz-Bandspreizung, bei der anstelle eines einzigen Informationssymbols in derselben Zeit eine Folge von Pseudozufallszahlen übertragen wird, erhöht sich die zur Übertragung benötigte Bandbreite um einen Faktor, der der Folge von Pseudozufallszahlen entspricht. Dadurch verlieren schmalbandige Störer und frequenzselektive Dämpfungseigenschaften ihren Einfluß auf das Übertragungsverfahren.

Mit dem älteren Verfahren der Datenübertragung in einem hohen Frequenzbereich ist es möglich, eine kostengünstige bidirektionale Datenübertragung im Echtzeitverfahren über die Niederspannungsleitungen der Energieversorgungsunternehmen zu realisieren. Dabei können Übertragungskanäle in ISDN-Qualität mit einer Datenrate von 64 kbit/s zur Verfügung gestellt werden, und die gesamte Übertragungskapazität der Niederspannungsleitung zwischen den an diese angeschlossenen Nutzern und der Übergangsstelle zwischen Niederspannungsnetz und übergeordnetem Telekommunikationsnetz beträgt bei einer Bitfehlerrate von etwa 10⁻⁶ über 100 m mindestens 2 Mbit/s jeweils für den Hin- und Rückkanal.

Trotz der vorgenannten vorteilhaften Eigenschaften des älteren Verfahrens unterliegt dieses jedoch mehreren wesentlichen Beschränkungen, die der vorgenannten Zielsetzung entgegenstehen. Es ist daher die Aufgabe der vorliegenden Erfindung, das ältere Verfahren bezüglich der Übertragungsqualität und -sicherheit noch weiter zu verbessern und auch seinen Einsatzbereich zu erweitern.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den zugeordneten Unteransprüchen.

Die Erfindung zeichnet sich dadurch aus, daß die Datenübertragung im Niederspannungsnetz in einem hochfrequenten Bereich oberhalb 148,5 kHz mit einer Bandspreizung der Datensignale und einem Sendepegel unterhalb der auf das beschriebene Verfahren anzuwendende Funk- und Leitungsstörspannungsgrenzen durchgeführt wird und die zur Gewährleistung einer Mehrkanalstruktur mit unterschiedlichen Sequenzen einer oder mehrerer Familien von numerischen Werten im Frequenzund/oder Zeitbereich gespreizten Signale zur Vorgabe einer empfängerspezifischen logischen Richtung im Niederspannungsnetz mit einer Richtungskodierung, Frequenzzuteilung oder Zeitschlitzzuteilung versehen werden, wobei die jeweils kanalspezifisch gespreizten und richtungsspezifisch gekennzeichneten binären Datenfolgen im Niederspannungsnetz in Abhängigkeit des Dämpfungsgrades mit Hilfe der vorgegebenen Sequenzen durch Korrelation, iterative oder parallele Störsignalunterdrückungsverfahren oder durch Zeit/Frequenz-Transformation erkannt, regeneriert und mit einer neuen Richtungskennung für die Weiterleitung der Signale bewertet werden.

Das in der älteren Patentanmeldung DE 197 14 386.5 beschriebene Verfahren sieht eine Kopplung des Niederspannungsnetzes mit einem übergeordneten Telekommunikationsnetz obligatorisch vor. Hieraus entstehen Nachteile hinsichtlich der Flexibilität für reine Niederspannungsnetzinseln. Sämtliche Kommunikationsvorgänge würden so immer über das als öffentlich anzusehende übergeordnete Telekommunikationsnetz erfolgen und damit mit höchster Wahrscheinlichkeit einer Tarifierung für den Nutzer unterliegen.

Auch sind Unterscheidungen zwischen der Nutzung der Niederspannungsnetze zur Überbrückung der sogenannten "Letzten Meile", also der Erreichung von Nutzerlokalitäten durch Überbrückung der Strecke zwischen Niederspannungsnetzstationen und Hausnetzen und der reinen Inhouse-Nutzung der Niederspannungsnetze möglich.

Ohne Kopplung an ein übergeordnetes Telekommunikationsnetz direkt oder über die "Letzte Meile" sind LAN-Lösungen möglich, die in der Inhousevariante oder im Einsatzgebiet auf Privatgelände ein lokales Netz bilden, in denen Sprach- und Datenkommunikation in der Betriebsregie des Nutzers und ohne die zumeist kostenpflichtige Nutzung öffentlicher Netzbetreiber erfolgen kann. Dabei kann ein so autarkes Teilkommunikationsnetz in Abhängigkeit der Netzbeschaffenheit und Abstrahlungscharakteristik die Leistungsfähigkeit eines vergleichbaren Ethernet (10Mbit/s) in Bustopologie erreichen.

Die Systemanordnung entspricht, je nach Größe des lokalen Netzes, entweder dem bisherigen maximalen Ausbau (ein Netz mit SAE (Signalaufbereitungseinheit), EGA (Endgeräte-Abschlußeinheit) und NÜG (Netzübergangseinheit)), wobei die NÜG durch eine Netzüberwachungs-, Vermittlungs- und Kontrollfunktion ergänzt ist, oder im minimalen Ausbau würde das lokale Netz nur eine SAVE (Signalaufbereitungs- und Vermittlungseinheit) haben, an der über die Niederspannungsleitung die EGA angeschlossen sind.

Weiterhin beschränkt das in der älteren Patentanmeldung beschriebene Verfahren die Nutzung der Niederspannungsnetze zur Zweiwege-Kommunikation auf einen Frequenzbereich bis maximal 30 MHz. Diese Einschränkung ist hinsichtlich der unterschiedlichen Anwendungsfälle im Outhouse- und Inhousebereich nachteilhaft. Eine Einschränkung auf bestimmte Frequenzbereiche ist ebenfalls aufgrund der sich insbesondere in hohen Frequenzbereichen als nicht ausweislich nachteilhaft für das beschriebene Verfahren darstellenden Netzeigenschaften nicht förderlich.

Der mögliche Übertragungsfrequenzbereich ist daher bei der vorliegenden Erfindung grundsätzlich in seiner Obergrenze unbegrenzt, wird sich in praktischer Anwendung aber abhängig vom Kabeltyp und von der Netzstruktur und den Abstrahleigenschaften auf der Niederspannungsleitung im Regelfall auf unter 30 MHz, für kurze Streckenabschnitte, z.B. zur Entkopplung von Teilnetzen, aber durchaus bis z.B. 60 MHz ergeben.

Das in der älteren Patentanmeldung beschriebene Verfahren geht von der Verwendung einer Mehrbenutzerstruktur durch geeignete Maßnahmen aus. Jedoch können sich insbesondere unter Berücksichtigung der bei dem erfindungsgemäßen verfahren möglichen Trennung von "Letzter Meile" und Inhouse-Niederspannungsnetz bei ausschließlicher Verwendung einer Mehrbenutzerstruktur Einschränkungen des Anwendungsbereichs ergeben. Bei reinen Inhouse-Netzen wäre bei nur einem Nutzer, aber mehreren EGA keine Mehrbenutzerstruktur gegeben; jedoch wäre zwischen den existenten mehreren EGA die gewünschte Kommunikation in Form einer Mehrkanalstruktur möglich.

In Verbesserung des in der älteren Patentanmeldung beschriebenen Verfahrens der Signalspreizung mit einer Familie von Pseudozufallszahlen wird hier die Spreizung mit unterschiedlichen Sequenzen einer oder mehrerer Familien von numerischen Werten eingeführt. Die Mehrkanalstruktur wird erstens durch die Überlagerung von gespreizten Signalen mit unterschiedlichen Sequenzen erreicht, wobei die Signale sowohl chipssynchron als auch asynchron überlagert werden können. Die optimale Sequenz von Zahlenfamilien ist nach den wirtschaftlichen und technischen Anforderungen an die Synchronität zu bestimmen. Weiterhin kann die Mehrkanalstruktur auch zusätzlich oder alternativ durch Zeitund/oder Frequenzvielfachstrukturen realisiert werden.

Schließlich wird das in der älteren Anmeldung beschriebene Verfahren auch durch die nachfolgend erläuterten Maßnahmen der erfindungsgemäßen Verfahrens erheblich in seiner Leistungsfähigkeit und damit der Bedeutung als wesentlicher Systemfaktor für die sichere Detektion des Nutzsignals aus dem Rauschbereich verbessert.

Ein Empfänger arbeitet nach dem Korrelationsverfahren, indem ein zeit- oder frequenzgespreiztes Signal mit einem Referenzsignal korreliert wird und das Ergebnis über den Entscheidungszeitraum einer Spreizperiode integriert und über einen Schwellwertdetektor auf einen logischen Zustand entschieden wird. Ein auf den Frequenzbereich durch mehrere Subcarrier gespreiztes Signal muß auf der Empfängerseite durch eine Zeit/Frequenz-Transformation gewandelt werden, wofür zweckmäßigerweise die Fast-Fourier-Transformation oder die Fast-Hadamard-Transformation eingesetzt wird. Vorteilhaft werden beide Verfahren kombiniert, so daß die Symboldauer eines Datenbits durch die Aufteilung auf mehrere Subcarrier verlängert werden kann, zweckmäßigerweise auf die Zeitdauer der in einem Übertragungskanal auftretenden Signalverbreiterung der Empfängersignale.

Zur weiteren Verbesserung eines Empfängers für ein Niederspannungs-Übertragungsverfahren ist ein Verfahren zur iterativen oder parallelen Störsignalunterdrückung vorgesehen sowie ein chipsynchrones Übertragungsverfahren. Dieses Verfahren ist unter der Bezeichnung Joint-Detection bekannt und dient zur Detektion zeitlich überlagerter Signale. Mit diesem Verfahren können bekannte Signale durch Korrelation aus dem Empfangssignal herausgerechnet werden, wobei die Sequenzen der Signale vorher zwischen Sender und Empfänger festgelegt und damit die Referenzsignale für den Korrelator bekannt sind.

Weiterhin können durch die Zeit/Frequenz-Transformation oder durch eine analytische digitale Signalverarbeitung weitere für die Nutzsignale störende Signale ermittelt und über z.B. das Joint-Detection-Verfahren aus dem Nutzsignal zur Erhöhung der Empfangsqualität herausgerechnet werden.

An der möglichen Übergangsstelle zwischen einem übergeordneten Telekommunikationsnetz bzw. der "Letzten Meile" und einem Inhouse-Netz sind Vermittlungseinrichtungen denkbar, die den in heutigen klassischen Telefonnetzen eingesetzten Nebenstellanlagen oder aber im LAN-Bereich eingesetzten Routern entsprechen. Diese Einrichtungen haben keine zwingende Bedeutung für das erfindungsgemäße Verfahren, können aber eine dem Nutzerkomfort dienende Ergänzung der vorgeschlagenen Anordnung darstellen, die zudem einige Leistungsmerkmale von Kommunikationsnetzen und -diensten kostengünstig in die Betreiberhoheit der Nutzer legt, ohne daß öffentliche Netzbetreiber in Anspruch genommen werden müßten.

In weiterer Ausbildung der Erfindung erfolgt die nutzerspezifische Bandspreizung aus einer Familie von Zahlenfolgen, z.B. Gold- oder Walsh-Hadamard-Folgen. Zur Vermeidung der gegenseitigen Störung von Nutzern bzw. deren Endgeräten werden in verschiedenen Netzteilbereichen unterschiedliche Familien von Pseudozufallsfolgen verwendet

In vorteilhafter Ausgestaltung wird die Vorgabe der logischen Richtung des Datenstroms, d.h. die durch eine empfängerspezifische Kodierung der Datensignale vorgegebene notwendige Datensignalrichtung zu einem bestimmten Empfänger nach der Code-Multiplextechnik durch Multiplikation mit Walsh-Folgen verzichtet werden, wenn für die Richtungskennung in unterschiedlichen Netzteilabschnitten speziell ausgesuchte, sich unterscheidende Zahlenfolgen eingesetzt werden. Der Vorteil wäre ein geringerer Signalverarbeitungsaufwand in der Echtzeitsignalverarbeitung, der jedoch zu Lasten eines höheren Aufwandes in der Kanalverwaltung geht.

Nach einem weiteren Merkmal der Erfindung kann die Richtungstrennung für den Hin- und Rücklauf zur Vorgabe einer logischen Richtung im Niederspannungsnetz auch mit einem Zeit- und/oder Frequenzmultiplexverfahren durchgeführt werden, wobei die Übertragung der bandgespreizten Signale in der Sende- und der Empfangsrichtung in jeweils gesonderten Frequenzbändern oder gesonderten Zeitbereichen erfolgt.

In der vor der eigentlichen Datenübertragung vorgesehenen Initialisierungsphase wird zunächst eine Initialisierungssequenz samt Identifikationsnummer des Nutzers sowie eine Anmeldesequenz ausgesendet und dem entsprechenden Nutzerendgerät dann mit der Identifikationsnummer eine Spreizungssequenz zugeteilt.

Die erfindungsgemäße Anordnung zur Durchführung des Verfahrens umfaßt ein Niederspannungsnetz mit Nutzerendgeräten, Ortsverteilerkästen und Netzstationen sowie ein übergeordnetes Telekommunikationsnetz, wobei den Netzstationen als Verbindungsglied zwischen dem Niederspannungs- und dem übergeordneten Telekommunikationsnetz und zur Kanalbelegung in dem jeweiligen Übertragungsmedium Netzübergangseinheiten zugeordnet sind und im Niederspannungsnetz in bestimmten Abständen Signalaufbereitungseinheiten zum Regenerieren und richtungsspezifischen Weiterleiten der Datensignale an eine folgende Signalaufbereitungseinheit oder an ein Nutzerendgerät bzw. eine Netzübergangseinheit angeordnet sind.

Dem Nutzerendgerät ist ein CDMA-Prozessor zum Spreizen der Daten mit einer diesem zugewiesenen Spreizungssequenz und zum Aufprägen einer Richtungskennung, ein Modulator zum Aufmodulieren dieser Signale auf eine Trägerfrequenz, ein regelbarer Verstärker zur Anpassung des beim Empfänger notwendigen Eingangspegels für ein optimales Korrelatorergebnis sowie ein Netzkoppler zur Einspeisung des gespreizten und richtungskodierten Datenstroms in das Niederspannungsnetz zugeordnet. Die Empfängerstruktur gliedert sich in einen regelbaren Low-Noise-Eingangsverstärker, einen IQ-Demodulator, einen Entzerrer, vorzugsweise Rake-Receiver, und einen CDMA-Prozessor zur Entspreizung der Datensignale. Im Basisband werden die nicht gespreizten Datensignale durch einen Kanalcodierer/-decodierer, z.B. Faltungscoder und Viterbi-Decoder, für die Übertragung aufbereitet. Ein Datenmultiplexer/-demultiplexer leitet die Daten an das Sprach- und Dateninterface weiter, das bei Bedarf für alle gängigen Schnittstellen (z.B. S₀, analog a/b, Ethernet) ausgelegt werden kann. Das Nutzerendgerät hat eine Geräteidentifikationskennung und zusätzlich ein SIM (Subsriber Identity Module), wodurch das System teilmobil eingesetzt werden. Kann.

Alle Komponenten werden von einem Mikroprozessor und einer zentralen Taktversorgung gesteuert. Das Taktsignal wird über das empfangende Datensignal synchronisiert. Die Sende- und Empfangssignale werden über ein Filter oder eine Frequenzweiche einer Netzkoppeleinheit zugeführt, über die das Nutzerendgerät auch gleichzeitig seine Stromversorgung erfährt. Bei Stromausfäll kann der Betrieb für eine begrenzte Zeit weitergeführt werden.

Die über Netzkoppler in das Niederspannungsnetz an Ortsverteilerkästen, in Laternenmasten und gegebenenfalls Hausanschlußkästen eingebundenen Signalaufbereitungseinheiten umfassen die gleichen Funktionsgruppen wie das Nutzerendgerät, jedoch sind die Funktionsgruppen der digitalen Signalverarbeitung (Entzerrer, CDMA-Prozessor, Kanalcodierer/-decodierer) und gegebenenfalls Teile der Taktsignalerzeugung entsprechend der Anzahl zu regenerierender Kanäle multipliziert mit der Anzahl der Signalrichtungen ausgelegt. Dabei werden die fehlerkorrigierten Datensignale aus dem Kanaldecoder direkt oder über eine Koppelmatrix in den nächsten Kanalcoder eingespeist. In das System ist auch - wie beim Nutzerendgerät -eine Geräteidentifikationskennung implementiert. Zusätzlich zeichnen sich die Signalaufbereitungseinheiten dadurch aus, daß in das System ein Wertespeicher integriert ist, in dem die aktuellen Kanalzuordnungen mit den entsprechenden Richtungskennungen und der zu nutzenden Sequenz sowie weitere Informationen zur Signalquelle und -senke abgelegt werden. Der Wertespeicher wird über den Mikroprozessor verwaltet.

Die Netzübergangseinheiten umfassen die gleichen Funktionsgruppen wie eine Signalaufbereitungseinheit, jedoch sind die Funktionsgruppen der digitalen Signalverarbeitung (Entzerrer, CDMA-Prozessor, Kanalcodierer/-decodierer) mehrfach entsprechend der Anzahl der zur übergeordneten Telekommunikationseinrichtung bereitgestellten Übertragungskanäle zuzüglich der pro Niederspannungsleitung benötigten Synchronisationskanäle ausgelegt. Weiterhin sind auch die Netzkoppler und die Frontends zur Niederspannung entsprechend er Anzahl der zu versorgenden Netzteilbereiche mehrfach ausgelegt.

Die dekodierten Datensignale werden über eine Koppelmatrix dem Übertragungssystem zugeführt, das auf der Telekommunikationsnetzseite die Signale in z.B. n * 2Mbit/s-Übertragungssysteme für Kupfer-, LWL-Leitungen oder Funkverbindungen aufbereitet, wobei sich n am Bedarf und den zur Verfügung stehenden Kapazitäten orientiert und in der Regel eine Zahl zwischen 1 und 3 darstellen wird.

Weiterhin wird mit einem Mikroprozessorsystem die Kanalzuteilung in der Netzübergangseinheit durch Konfiguration des Koppelfeldes und der CDMA-Prozessoren vorgenommen. Die Netzübergangseinheit hat ebenfalls eine Geräteidentifikationskennung und besitzt einen Wertespeicher, in dem die Daten aller aktiven Verbindungen, bestehend aus der Wegeinformation, der Kanalzuordnung, der Signalqualität während der Verbindung, der Nutzerendgerätekennung, der genutzten Dienste, und der zugeordnete Übertragungskanal zur übergeordneten Telekommunikationszentrale gespeichert sind.

Weitere Merkmale sowie zweckmäßige Weiterbildungen und Vorteile der Erfindung sind in den Unteransprüchen sowie in dem nachfolgend wiedergegebenen Ausführungsbeispiel dargestellt.

Ein Ausführungsbeispiel der Erfindung wird anhand der beigefügten Zeichnung näher erläutert. Es zeigen:
- Fig.1: Die Struktur eines Kommunikationsnetzes auf der Basis eines typischen Niederspannungsnetzes;
- Fig. 2: Ein Blockschaltbild eines Nutzerendgerätes;
- Fig. 3: Ein Blockschaltbild einer Signalaufbereitungseinheit mit einem Netzkoppler;
- Fig 3a: ein Blockschaltbild einer Signalaufbereitungseinheit für mehrere Netzkoppler;
- Fig. 4: ein Blockschaltbild einer Netzübergangseinheit;
- Fig. 5: Eine schematische Darstellung der Kennzeichnung der Datenströme zur Vorgabe einer logischen Richtung im Niederspannungsnetz;
- Fig. 6: eine schematische Darstellung zur Kennzeichnung der Frequenzvergabe und zur Definition von Bezugspunkten zur Regelsteuerung;
- Fig. 7: ein Blockschaubild der Funktionskomponenten des übergeordneten Telekommunikationsnetzes; und
- Fig. 8: eine schematische Darstellung der Dämpfungsmaßnahmen gegen Störeinkopplungen an einem Ortsverteilerkasten mit Anschlußmöglichkeiten für eine Signalaufbereitungseinheit oder eine Netzübergangseinheit.

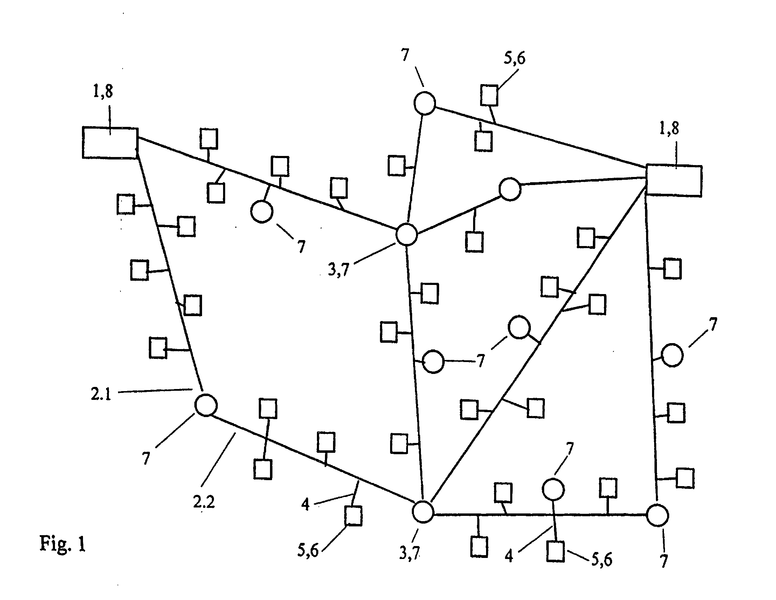

Die Grundstruktur des erfindungsgemäßen Kommunikationsnetzes entspricht der eines entsprechenden Niederspannungsnetzes. In diesem Kommunikationsnetz sind Netzstationen 1 über Niederspannungsleitungen 2 mit Ortsverteilerkästen und einer Netzstation sind Abzweigleitungen 4 angeschlossen, die mit den einzelnen Nutzern 5 verbunden sind. Die Länge einer Niederspannungsleitung 2 zwischen zwei Ortsverteilerkästen 3 beträgt in Abhängigkeit vom Bebauungsgrad etwa 100 m bei Hochhaussiedlungen, 200 m bei Häuserreihen in der Innenstadt und bis zu 500 m in Einfamilienhausgebieten. Die Nutzer 5 sind in Fig. 1 nur beispielhaft dargestellt, tatsächlich ist deren Zahl wesentlich größer. Um die Funktion als Datenübertragungsnetz wahrnehmen zu können, sind den Nutzern Nutzerendgeräte 6 zugeordnet, deren Daten über die Niederspannungsleitungen 2 und zwischengeschaltete Signalaufbereitungseinheiten 7 u den üblicherweise in oder in unmittelbarer Nähe der Netzstation 1 angeordneten Netzübergangseinheiten 8 sowie in umgekehrter Richtung geleitet werden. Alternativ kann die Netzübergangseinheit auch an jedem beliebigen Punkt der Niederspannungsleitungen 2, so auch bei den Ortsverteilerkästen 3, angeschlossen werden, sofern dieser Punkt für die Anbindung an die Leitungsstruktur des übergeordneten Telekommunikationsnetzes 48 günstig liegt.

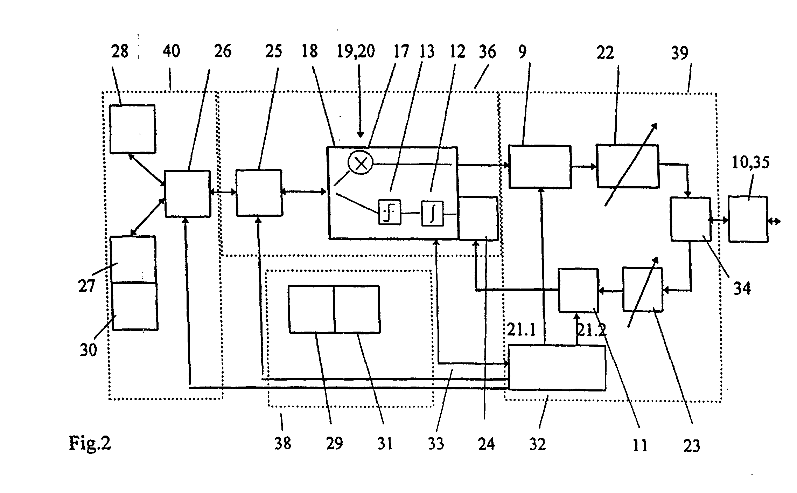

Eine konkrete Ausführungsform eines Nutzerendgerätes 6 besteht gemäß Fig. 2 im wesentlichen aus einer Interface-Funktionsgruppe 40, einem digitalen Signalverarbeitungssystem 36, einem Frontend zur Niederspannung 39 sowie einem Mikroprozessorsystem 38, die in der Zeichnung jeweils in einem durch strichpunktierte Linien begrenzten Bereich zusammengefaßt sind. Es umfaßt im einzelnen einem CDMA-Prozessor 18 mit Multiplizierer 17 sowie einen Verstärker 22, einen Modulator 9 und einen Netzkoppler 10, während die Empfängerstruktur einen Low-Noise-Eingangsverstärker 23, einen IQ-Demodulator 11, einen Entzerrer 24 und den CDMA-Prozessor 18 mit dem Integrator 12 und dem Schwellwertdetektor 13 einschließt. Des weiteren sind ein Kanalcodierer/-decodierer 25, ein Datenmultiplexer/demultiplexer 26 zur Weiterleitung der Daten an ein Dateninterface 28 sowie ein Sprach- und Bedieninterface 27 vorgesehen. Außerdem verfügt das Nutzerendgerät 6 über eine Geräteidentifikationskennungseinheit 29, einen SIM (subscriber identity module) 30, einen Mikroprozessor 31 und eine Taktversorgungseinheit 32, wobei die durch einen Pfeil symbolisierten Synchronisations- und Taktsignale mit 33 bezeichnet sind. Über eine Frequenzweiche oder ein Frequenzfilter 34 und über den Netzkoppler 10 erfolgt der Anschluß an die Niederspannungsleitung 2, von der auch die Stromversorgungseinheit 35 für das Nutzerendgerät gespeist wird. Die Bezugszeichen 19, 20 und 21 bezeichnen jeweils die durch Pfeil markierte Spreizungssequenz bzw. die Richtungskennung bzw. die Trägerfrequenz.

Die Netzübergangseinheit 8 bildet jeweils die Verbindungsstelle zwischen dem Niederspannungskommunikationsnetz und dem üblicherweise für die Datenübertragung vorgesehenen Netzwerk (nicht dargestellt), zum Beispiel einem Datenfunknetz, einem Fernmelde- oder einem Lichtleiternetz. Die Netzübergangseinheit 8 hat also die Aufgabe, die Daten aus dem Niederspannungsnetz zu konzentrieren und über das übergeordnete Telekommunikationsnetz 48 an eine Zentrale zu senden bzw. die von der Zentrale empfangenen Daten in das Niederspannungsnetz zur Weiterleitung an die Nutzerendgeräte 6 einzuspeisen.

Zur Datenübertragung mittels der Direktsequenz-Bandspreiztechnik sendet das Nutzerendgerät 6 die unter Verwendung einer individuellen Zahlenfolge aufbereiteten Datensignale an die nächstgelegene Signalaufbereitungseinheit 7, wobei die von dieser empfangenen Daten durch Korrelation des Datenstroms mit der dem Nutzerendgerät 6 zugewiesenen Zahlenfolge detektiert werden. Die auf dem Weg von bzw. zu den Nutzerendgeräten 6 zur Regenerierung der Daten vorgesehenen signalaufbereitungseinheiten 7 sind bei erdverlegten Leitungen in Abständen von etwa 100 m in den Ortsverteilerkästen, Lichtmasten oder Hausanschlußkästen angeordnet. In Haushaltsbereichen mit stark verzweigter Kabelverlegung und zusätzlich angeschlossenen Haushaltsgeräten, Zählern und dergleichen sind wegen der großen Dämpfung unter Umständen Signalaufbereitungen in Abständen von 20 bis 30 m erforderlich.

Die Srach- und Datenübertragung in dem vorliegenden Niederspannungsnetz erfolgt in einem Frequenzband oberhalb 148,5 kHz unter Anwendung der Direktsequenz-Bandspreiztechnik unter Einbeziehung der Codemultiplextechnik, um einerseits den Einfluß schmalbandiger Störer zu unterdrücken und mit geringer Signalleistung große Entfernungen überbrücken zu können, und zwar möglichst ohne zwischenzeitliche Regeneration des Signals und zur Signaldetektion auch noch von verrauschten Signalen zur Erzielung größerer Reichweiten, und andererseits mehreren Nutzern gleichzeitig eine Datenübertragung zu ermöglichen. Für die Datenübertragung in dem Codemultiplexsystem verwendet jedes Nutzerendgerät 6 eine eigene Zahlenfolge, die diesem, da nicht beliebig viele solcher Zahlenfolgen existieren, durch das übergeordnete Telekommunikationssystem über die zuständige Netzübergangseinheit 8 zugeordnet wird. Die Auswahl der Zahlenfolgen erfolgt zudem nicht willkürlich, sondern aus einer Codefamilie, und zwar einer Familie von beispielsweise Gold-Folgen, da dort die Anzahl der Sequenzen einer bestimmten Länge groß ist. Auf diese Weise ist die gegenseitige Beeinflussung der Nutzerendgeräte 6 so gering wie möglich.

Die für die Initialisierung notwendige Kommunikation des Nutzerendgerätes 6 mit der Netzübergangseinheit 8 erfolgt über die nächste Signalaufbereitungseinheit 7, bei der sich das Nutzerendgerät 6 mit einem Signal in Form einer für diesen Zweck reservierten Zahlensequenz, der sogenannten Initialisierungssequenz, anmeldet. Die umliegenden Signalaufbereitungseinheiten 7 antworten auf die Initialisierungssequenz mit einer Identifikation der Signalaufbereitungseinheit 7, deren Entfernung zur nächsten Netzübergangseinheit 8 und der Identifikationsnummer dieser Netzübergangseinheit.

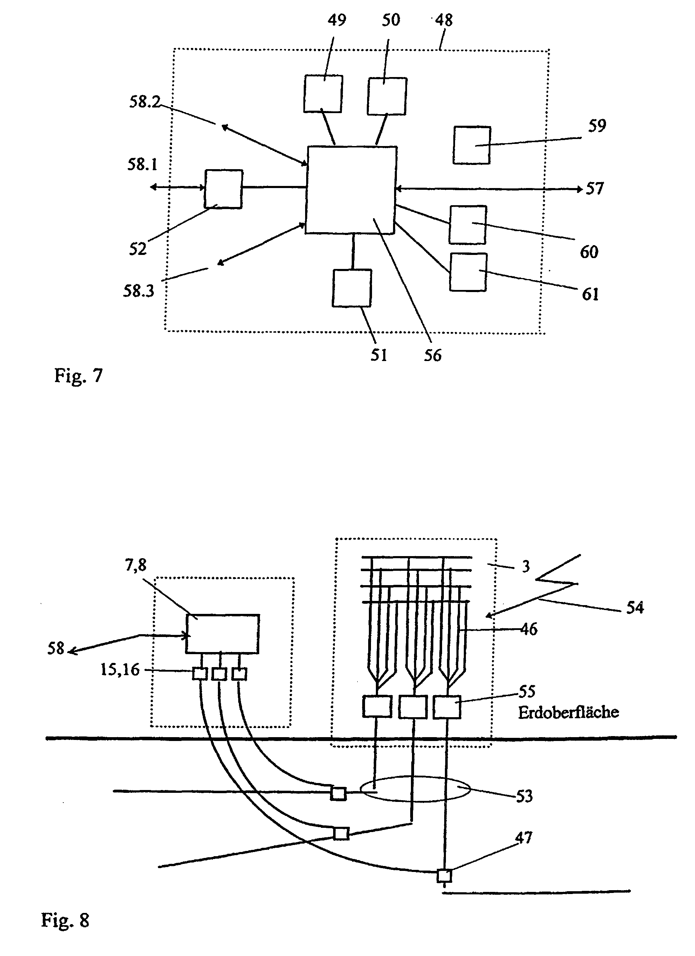

Bei der Darstellung der Funktionskomponenten des übergeordneten Telekommunikationsnetzes 48 sind das Koppelnetz mit 56, die Übertragungswege zum Teilnehmer mit 58, eine Transitstele mit 57 und eine Mikroprozessoreinheit mit 59 bezeichnet. Über die zuerst angesprochene Netzübergangseinheit 8 wird die Initialisierung des neuen Nutzerendgerätes 6 an das übergeordnete Telekommunikationsnetz 48 weitergeleitet, indem dort die Lageinformation des neuen Nutzerendgerätes 6 registriert wird. Über die zentrale Abfrage der Daten eines SIM 30 des Nutzerendgerätes 6 kann, ähnlich wie in Funknetzen, in einem zentralen Heimatadressenregister 48 des übergeordneten Telekommunikationsnetzes 48 (Fig. 7) die Heimatadresse des Nutzerendgerätes 6 angemeldet werden, in dem dann bei Umzügen oder teilmobilen Einsätzen auch die jeweils aktuelle Lage in einem Besucherregister 50 speicherbar ist. Diese Register werden an einer zentralen Stelle des übergeordneten Telekommunikationsnetzes 48 verwaltet. In den Besucherregistern 50 sind neben wichtigen Teilnehmerdaten auch die um ein Nutzerendgerät 6 direkt umliegend angeordneten Signalaufbereitungseinheiten 7 oder Netzübergangseinheiten 8 eingetragen. Im Falle der Initiaiisierungsphase des Nutzerendgerätes 6 oder eines Gesprächsaufbaus von oder zum Nutzerendgerät wird in der Zentrale aufgrund der Registerinformation des Heimadressen- und Besucherregisters 49, 50 die aktuelle Lage erkannt und in einem Server 51, in dem alle Signalaufbereitungseinheiten 7 und Netzübergangseinheiten 8 eines Versorgungsgebietes registriert sind, werden mindestens drei der kürzesten möglichen Verbindungen errechnet. In den Netzübergangseinheiten 8 zugeordneten zentralen Überwachungsstationen 52 werden die im Server 51 ermittelten möglichen Übertragungswege auf ihre Verkehrsauslastung hin untersucht. Der günstigste Weg wird ausgewählt. Alternativ werden im Server 51 neue Wege berechnet. Die so ermittelte Netzübergangseinheit 8 und die weiteren Signalaufbereitungseinheiten 7 reservieren daraufhin für den angeforderten Übertragungskanal die in den einzelnen Netzteilbereichen 2.1, 2.2 (Fig. 2) benötigten Pseudozufallszahlenfolgen (Spreizungssequenz "19"), da dem Nutzerendgerät 6 während der Initialisierungsphase noch keine eigene Sequenz zugewiesen ist. Die einzelnen Familien der Pseudozufallsfolgen werden für die einzelnen Netzübergangseinheiten 8 und Signalaufbereitungseinheiten 7 vom übergeordneten Telekommunikationsnetz 48 in einer Netzkonfigurationsphase festgelegt. Neben der Festlegung des optimalen Übertragungsweges wird im übergeordneten Telekommunikationsnetz 48 während der Initialisierungsphase in einem Kontrollregister für die Teilnehmerberechtigung 60 und in einem Kontrollregister für die Endgerätezulassung 61 auch noch die Teilnehmerzugangsberechtigung und die Identifikationsnummer des Endgerätes überprüft.

Nach Freigabe des Nutzerendgerätes wird diesem dann eine von der Netzübergangseinheit 8 oder der Signalaufbereitungseinheit 7 ausgewählte Spreizungssequenz übermittelt, die aus einer Familie von Gold-Folgen stammt. Damit sich aber in einer mit mehreren Netzübergangseinheiten 8 verbundenen Signalaufbereitungseinheit 7 die Signale von mit anderen Netzübergangseinheiten 8 kommunizierenden Nutzerendgeräten 6 im wesentlichen nicht stören, werden benachbarten Netzübergangseinheiten 8 unterschiedliche Familien von Gold-Folgen durch das übergeordnete Telekommunikationsnetz 48 zugewiesen. Dadurch wird die gegenseitige Beeinflussung zweier nicht mit derselben Netzübergangseinheit 8 kommunizierender Nutzerendgeräte 6 minimiert. Bei der Übermittlung der Spreizungssequenz an das Nutzerendgerät 6 wird wieder die Gerätenummer des Endgerätes mit übertragen, so daß ein anderes, sich gerade in der Initialisierungsphase befindliches Nutzerendgerät diese Pseudozufallszahlenfolgen nicht für sich beanspruchen kann. Zum Abschluß der Initialisierungsphase sendet das Nutzerendgerät 6 eine Empfangsbestätigung, die bereits mit der zugewiesenen Zahlenfolge gespreizt ist. Die Initialisierung kann unmittelbar nach dem Einschalten des Endgerätes vorgenommen werden. Dann wird auch ohne Datenübertragung eine Pseudozufallszahlenfolge belegt. Zum anderen kann die Initialisierung bei tatsächlich vorhandenem Kommunikationsbedarf durchgeführt werden, wobei in diesem Fall die Kommunikation nur vom Endgerät aus gestartet werden kann. Eine dritte Möglichkeit besteht in einer Minimalinitialisierung beim Einschalten des Nutzerendgerätes 6, wobei in diesem Fall die Pseudozufallszahlenfolge erst vor einer Datenübertragung vergeben wird.

Zur Datenübertragung werden die Nutzerdaten, wie das Blockschaltbild eines Nutzerendgerätes 6 gemäß Fig. 2 zeigt, mit der dem Nutzerendgerät zugeordneten Spreizungssequenz gespreizt. Außerdem erfolgt zur Vorgabe einer Datenstromrichtung eine bestimmte Zuordnung einer Sequenzfamilie oder eine Multiplikation des Datenstroms mit einer Walsh-Folge, so daß die Daten in einer gewünschten Richtung durch das Niederspannungsnetz übertragen werden können. Die so erzeugte binäre Datenfolge wird mit einem dem Nutzerendgerät 6 zugeordneten Modulator 9 auf eine Trägerschwingung moduliert und dann über einen Netzkoppler 10 in die Niederspannungsleitung 2 zur Weiterleitung an eine Singnalaufbereitungseinheit 7 eingespeist.

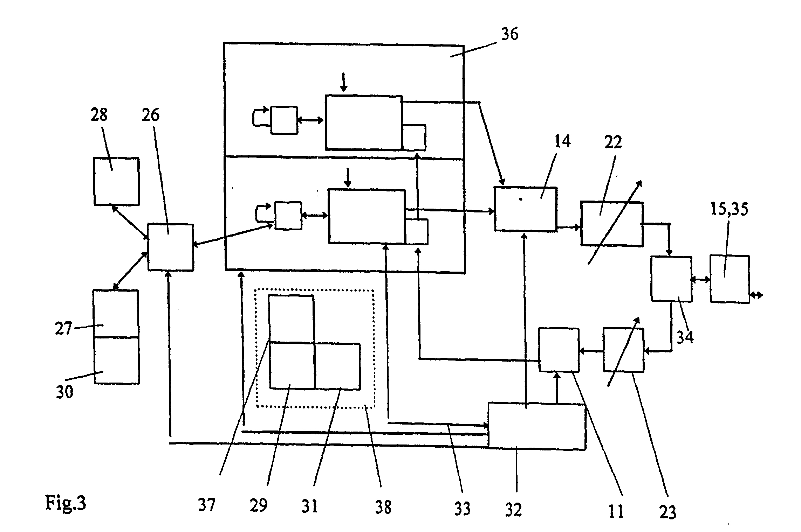

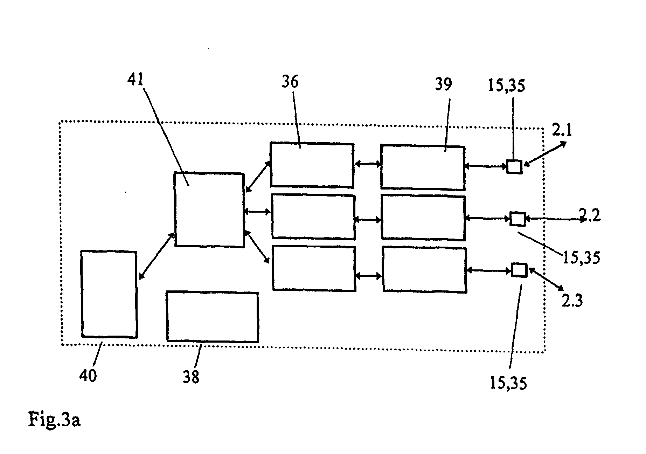

Entsprechend dem in Fig. 3 dargestellten Blockschaltbild einer Signalaufbereitungseinheit 7, bei der gegenüber dem in Fig. 2 dargestellten Nutzerendgerät 6 der Modulator mit 14 und ein dem Mikroprozessorsystem 38 zugeordneter Wertespeicher mit 37 bezeichnet ist, werden die an einem Netzkoppler 15 eingekoppelten Daten mit Hilfe eines Demodulators 11 sowie eines Entzerrers 24, eines Integrators 12 und eines Schwellwertdetektors 13 wiedergewonnen. Die regenerierten Daten werden dann erneut mit der dem Nutzerendgerät 6 zugeteilten Sequenz bandgespreizt und für die Übertragungsrichtung beispielsweise mit einer Walsh-Folge gekennzeichnet. Im Modulator 14 wird eine Trägerschwingung mit den binären Daten moduliert und anschließend erfolgt über den Netzkoppler 15 die Aussendung des aufbereiteten Signals.

Die in fig. 3 gezeigte Signalaufbereitungseinheit ist für die Signalaufbereitung an einer durchgehenden Niederspannungsleitung vorgesehen. Prinzipiell kann diese Komponente unter Ausnutzung von Übersprecheffekten auch in Ortsverteilerkästen 3 oder in Netzübergangseinheiten 8 eingesetzt werden, jedoch empfiehlt sich dann die Anwendung von Dämpfungsmaßnahmen gemäß fig. 8. Die so entkoppelten Netzteilbereiche müssen dann über eine Signalaufbereitungseinheit nach Fig. 3a verknüpft werden, die für jeden Netzteilbereich einen eigenen Netzkoppler 15, Frontend zur Niederspannung 39 und ein digitales Signalverarbeitungssystem 36 benötigen. Über eine Koppelmatrix 41 (Fig. 3a) werden dann die regenerierten Datensignale den richtigen Netzteilbereichen zugeordnet.

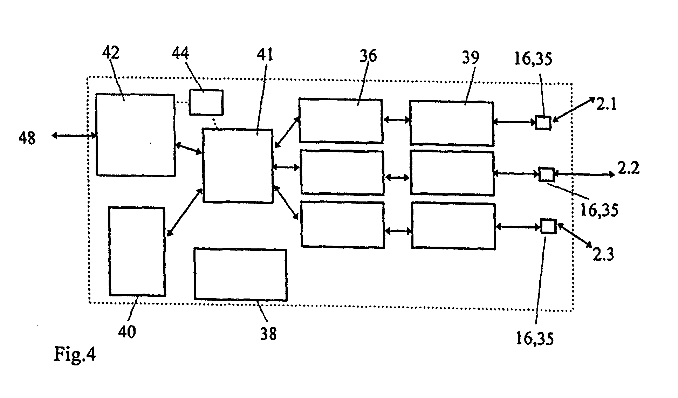

Aus der in fig. 4 dargestellten Netzübergangseinheit 8 wird deutlich, daß deren Aufbau einer Signalaufbereitungseinheit gleicht, der hinter dem Koppelfeld nur noch durch das Übertragungssystem 42 zum übergeordneten Telekommunikationsnetz 48 ergänzt ist. Optional kann der Netzübergangseinheit noch ein Daten- und Protokollanpassungssystem 44 zugeordnet sein, in dem die Datensignale von der Niederspannungsseite an die Protokollstrukturen eines schon bestehenden Systems für ein übergeordnetes Telekommunikationsnetz (z.B. Dect-Backbone-Strukturen) angepaßt werden.

Der Vorgang der Signalaufbereitung unter Anwendung der Direktsequenz-Bandspreiztechnik und der Codemultiplextechnik wiederholt sich so oft, bis das Signal die Strecke zwischen dem Nutzerendgerät 6 und der Netzübergangseinheit 8 in der einen oder der anderen Richtung zurückgelegt hat. Dabei unterscheidet sich die Datenübertragung in der Richtung vom Nutzerendgerät zur Netzübergangseinheit von der in der entgegengesetzten Richtung nur unwesentlich. Für beide Richtungen erfolgt die Wegeauswahl über die Netzübergangseinheit 8 und über die Signalaufbereitungseinheit 7 durch den im übergeordneten Telekommunikationsnetz 48 angesiedelten Server 51.

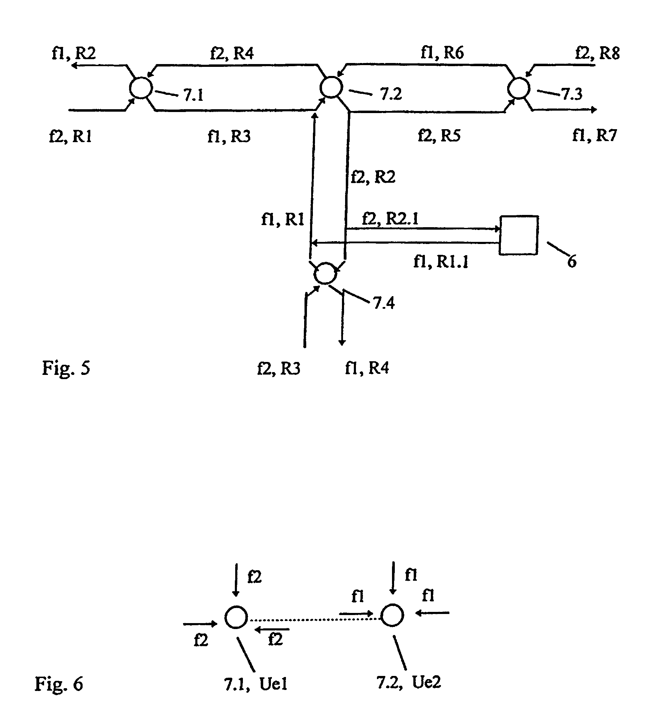

Fig. 5 gibt das Prinzip der Richtungskennung der Datenströme ausgesuchter Sequenzfamilien oder mit den Walsh-Folgen, deren Länge kleiner als die der verwendeten Spreizungssequenzen ist, wieder. Am Beispiel der Walsh-Folgen wird erläutert, wie eine Kennzeichnung der Datenströme in der Weise vorgenommen werden kann, daß beispielsweise die von der Signalaufbereitungseinheit 7.1 an die Signalaufbereitungseinheit 7.3 zu sendenden Daten eine Richtungskennung R3 erhalten. Die Signalaufbereitungseinheit 7.2 kann, wie aus Fig. 5 ersichtlich ist, Daten mit der Richtungskennung R3 erkennen und versieht dieses Signal nach der Regenerierung mit der Richtungskennung R5. Das derart gekennzeichnete, ausgesendete Signal wird nur von der Signalaufbereitungseinheit 7.3 regeneriert und - versehen mit der neuen Richtungskennung R7 - an die nächste Signalaufbereitungseinheit weitergeleitet. Da das hier verwendete physikalische Medium im Gegensatz zu anderen Kommunikationsnetzen in der einzelnen Signalaufbereitungseinheiten nicht getrennt werden kann, werden die gekennzeichneten Datenströme zwar auch von anderen Signalaufbereitungseinheiten empfangen, aber nicht regeneriert, nicht gekennzeichnet und nicht erneut ausgesendet. Das heißt, die jeweiligen Signalaufbereitungseinheiten bereiten nur Signale mit der für sie vorgesehenen spezifischen Richtungskennung auf. So empfängt die Signalaufbereitungseinheit 7.1 zwar den von der Signalaufbereitungseinheit 7.2 regenerierten und gekennzeichneten Datenstrom R5 und R2, aber bereitet ihn nicht auf, da sie, wie Fig. 5 zeigt, nur Datenströme mit der Richtungskennung R1 und R4 erkennt. Auf diese Weise wird die unter den vorliegenden Bedingungen nicht mögliche physikalische Trennung in eine logische umgesetzt.

Die gleiche physikalische Trennung gilt auch für Signale, die das Nutzerendgerät 6 erreichen sollen. In der in Fig. 5 dargestellten Anordnung sind die Signalaufbereitungseinheiten 7.2 und 7.4 und das Nutzerendgerät so konfiguriert, daß das Nutzerendgerät 6 von der Signalaufbereitungseinheit 7.2 gespeist und auch abgefragt wird. Diese Sendesignale mit der Richtungskennung R2 werden von der Signalaufbereitungseinheit 7.4 nicht mehr berücksichtigt wird. Die Einstellung der Wege, auf denen welches Signal empfangen und ggf. regeneriert und verstärkt wird, erfolgt über den zentralen Server 51 im übergeordneten Telekommunikationssystem 48.

Fig. 6 gibt das Prinzip der Richtungsaufteilung für die Hin- und Rückrichtung für zwei Frequenzen an. Am Beispiel der Signalaufbereitungseinheit 7.1 wird deutlich, daß die Empfangssignale nur auf der Frequenz f2 und dementsprechend die Ausgangssignale in alle Richtungen nur auf der Frequenz f1 abgesetzt werden. Bei der benachbarten Signalaufbereitungseinheit 7.2 sind die Sende- und Empfangsfrequenzen entsprechend vertauscht. Bei ringförmig angeordneten Signalaufbereitungseinheiten ist auf eine gerade Anzahl der Systeme zu achten, jedoch müssen alternativ zwei weitere Frequenzbänder für die Übertragung genutzt werden. Die Richtungsaufteilung über Frequenzen ist notwendig, da sich sonst die Sende- und Empfangssignale überlagern und der Empfangskorrelator durch ein zu hohes Sendesignal blockiert wird. Zur Verbesserung des S/N-Abstandes beim Empfänger müssen die Ausgangsverstärker aller Sendesignale für diese Empfangsfrequenz auf den Pegel des am weitesten liegenden Empfängers abgestimmt werden. Wenn das die Signalaufbereitungseinheit 7.1 ist, müssen alle Sender der Frequenz f2 auf den Pegel Uel am Empfänger der Signalaufbereitungseinheit 7.1 ausgeregelt werden. Das Prinzip der Richtungsaufteilung für die Hin- und Rückrichtung kann alternativ zur Frequenzbandaufteilung auch durch eine Zeitabschnittsaufteilung erfolgen, wobei zwischen den Zeitabschnitten für die Hin- und Rückrichtung jeweils ein Zeitpuffer erforderlich ist.

Gemäß Fig. 8 sind bei einem Ortsverteilerkasten 3 mit stark verzweigtem Kabelsystem 53 zwischen den Leitungsenden 46 im Ortsverteilerkasten 3 und einem Abgreifpunkt 47 an dem nicht aufgespleisten Niederspannungskabel hochfrequente Dämpfungselemente 55 vorgesehen, um die Wirkung von mit dem Pfeil 4 bezeichneten Störspannungseinkopplungen zu mindern. Dabei ist an jedem Abgreifpunkt 47 über eine Zuleitung ein Netzkoppler 15, 16 angeschaltet, mit dem die Signalaufbereitungseinheit 7 bzw. die Netzübergangseinheit 8 verbunden ist.

## Patentansprüche

1. Verfahren zur Datenübertragung in Zweiweg-Kommunikation über Niederspannungsnetze, mit oder ohne Kopplung an ein übergeordnetes Telekommunikations-, Spach- oder Datennetz, **dadurch gekennzeichnet, daß** die Übertragung im Niederspannungsnetz in einem hochfrequenten Bereich oberhalb 148,5 kHz mit einer Bandspreizung der Datensignale und einem Sendepegel unterhalb der auf das beschriebene Verfahren anzuwendenden Funk und Leitungsstörspannungsgrenzen durchgeführt wird und die zur Gewährleistung einer Mehrkanalstruktur mit unterschiedlichen Sequenzen einer oder mehrerer Familien von numerischen Werten im Frequenzund/oder Zeitbereich gespreizten Signale zur Vorgabe einer empfängerspezifischen logischen Richtung im Niederspannungsnetz mit einer Richtungskodierung, Frequenzzuteilung oder Zeitschlitzzuteilung versehen werden, wobei die jeweils kanalspezifisch gespreizten binären Datenfolgen im Niederspannungsnetz in Abhängigkeit des Dämpfungsgrades mit Hilfe der vorgegebenen Sequenzen durch Korrelation, iterative oder parallele Störsignalunterdrückungsverfahren oder durch Zeit/Frequenz-Transformation erkannt, regeneriert und mit einer neuen Richtungskennung für die Weiterleitung der Signale bewertet werden.

2. Verfahren nach Anspruch 1,
**dadurch gekennzeichnet,**
**daß** als Zeit/Frequenz-Transformation eine Fast-Fourier-Transformation durchgeführt wird.

3. Verfahren nach Anspruch 1,
**dadurch gekennzeichnet,**
**daß** als Zeit/Frequenz-Transformation eine Fast-Hadamard-Transformation durchgeführt wird.

4. Verfahren nach Anspruch 1,
**dadurch gekennzeichnet,**
**daß** als Zeit/Frequenz-Transformation eine Kombination aus einer Fast-Fourier-Transformation und einer Fast-Hadamard-Transformation durchgeführt wird.

5. Verfahren nach einem der Ansprüche 1 bis 4,
**dadurch gekennzeichnet,**
**daß** eine Unterscheidung zwischen einer Kommunikation nur innerhalb eines Niederspannungsnetzes oder über ein angekoppeltes Telekommunikations-, Sprach- oder Datennetz erfolgt.

6. Verfahren nach einem der Ansprüche 1 bis 5,
**dadurch gekennzeichnet,**
**daß** die Nutzsignale im empfangenen Signal durch das Joint-Detection-Verfahren ermittelt werden.

7. Verfahren nach Anspruch 1,
**dadurch gekennzeichnet,**
**daß** die kanalspezifische Bandspreizung der Datensignale mit Sequenzen einer oder mehrerer abgestimmter Familien von Zahlenfolgen, wie z.B. Gold- oder Walsh-Hadamard-Folgen, erfolgt.

8. Verfahren nach Anspruch 7,
**dadurch gekennzeichnet,**
**daß** zur Vermeidung der gegenseitigen Störung von in unterschiedlichen Netzteilbereichen angeordneten Nutzern benachbarte Familien von Zahlenfolgen keine gleichartigen Sequenzen beinhalten.

9. Verfahren nach einem der Ansprüche 1 bis 8,
**dadurch gekennzeichnet,**
**daß** die Vorgabe der logischen Richtung des Datenstroms im Niederspannungsnetz nach der Bandspreizung mit Direktsequenztechnik durch Multiplikation des Datenstroms mit einer Walsh-Folge vorgenommen wird.

10. Verfahren nach Anspruch 9,
**dadurch gekennzeichnet,**
**daß** die Länge der für die Richtungskodierung vorgesehenen Walsh-Folgen kleiner als die der verwendeten Bandspreizsequenzen ist.

11. Verfahren nach einem der Ansprüche 1 bis 8,
**dadurch gekennzeichnet,**
**daß** die Vorgabe der logischen Richtung des Datenstroms im Niederspannungsnetz durch gezielte strukturierte Zuordnung ausgesuchter Familien von Zahlenfolgen zu einzelnen Netzteilbereichen erfolgt, die von zwei Signalaufbereitungseinheiten oder einer Netzübergangseinheit und einer Signalaufbereitungseinheit eingeschlossen sind.

12. Verfahren nach einem der Ansprüche 1 bis 8,
**dadurch gekennzeichnet,**
**daß** zur Richtungstrennung in einem Zeit- oder Frequenz-Multiplexverfahren die Übertragung der bandgespreizten Signale in der Sende- und der Empfangsrichtung in jeweils gesonderten Zeitabschnitten oder Frequenzbändern erfolgt.

13. Verfahren nach einem der Ansprüche 1 bis 12,
**dadurch gekennzeichnet,**
**daß** die Sendepegel der einzelnen Sendeeinheiten eines Netzteilbereichs so geregelt werden, daß an den Empfängern der Signalaufbereitungseinheit oder der Netzübergangseinheit alle überlagerten Signale einer Frequenz im kontrollierten Zeitabschnitt nahezu den gleichen Pegel aufweisen.

14. Verfahren nach einem der Ansprüche 1 bis 8,
**dadurch gekennzeichnet,**
**daß** vor der eigentlichen Datenübertragung eine Initialisierungsphase durch Aussendung einer Initialisierungssequenz samt Identifikationsnummer des jeweiligen Nutzers und des Nutzerendgerätes und einer Anmeldesequenz sowie eine darauf folgende Zuteilung einer Spreizungssequenz für den jeweiligen Nutzer vorgesehen ist.

15. Verfahren nach Anspruch 9,
**dadurch gekennzeichnet,**
**daß** die Identifikationskennzeichen des jeweiligen Nutzers und des Nutzerendgerätes nach dem Aussenden der Initialisierungssequenz im übergeordneten Telekommunikationsnetz hinsichtlich der Zulassung des Nutzerendgerätes und der Kommunikationsberechtigung des Nutzers überprüft werden.

16. Anordnung zur Durchführung des Verfahrens nach einem der Ansprüche 1 bis 15, bestehend aus einem Niederspannungsnetz mit an dieses angeschlossenen Nutzern mit Nutzerendgeräten, Ortsverteilerkästen und Netzstationen sowie einem dem Niederspannungsnetz übergeordneten Telekommunikationsnetz,
**dadurch gekennzeichnet,**
**daß** den Netzstationen (1 als Verbindungsglied zwischen dem Niederspannungsnetz und dem übergeordneten Telekommunikationsnetz (48) und zur Kanalbelegung in dem jeweils anderen Datenübertragungsmedium Netzübergangseinheiten (8) zugeordnet sind und im Niederspannungsnetz in bestimmten Abständen Signalaufbereitungseinheiten (7) zum Regenerieren und richtungsspezifischen Weiterleiten der Datensignale an eine folgende Signalaufbereitungseinheit bzw. an ein Nutzerendgerät (6) oder eine Netzübergangseinheit (8) vorgesehen sind.

17. Anordnung nach Anspruch 16,
**dadurch gekennzeichnet,**
**daß** dem Nutzerendgerät (6) die Funktionseinheiten Netzkoppler (10), Frequenzweiche oder Filter (34), regelbarer Low-Noise-Eingangsverstärker (23), IQ-Demodulator (11), Modulator (9), regelbarer Ausgangsverstärker (22), Entzerrer oder Störsignal-Unterdrückungseinheit (24), CDMA-Prozessor (18), Kanalcoder(-decoder (25), Sprach-/Datenmultiplexer (26), Sprach- und Bedieninterface (27), Dateninterface (28), SIM (subscriber identity module) (30), Geräteidentifikationskennungseinheit (29), Mikroprozessor (31), zentrale Taktversorgungseinheit (32), Synchronisationseinrichtung (33), Notstromversorgungseinheit oder Stromversorgungseinheit (35) sowie Regeleinrichtungen zur Regulierung des Empfangs- und Sendepegels zugeordnet sind.

18. Anordnung nach Anspruch 17,
**dadurch gekennzeichnet,**
**daß** der CDMA-Prozessor (18) zum Spreizen der Daten und zum Aufprägen einer Richtungskennung mit diesem zugewiesener Spreizungssequenz, der Modulator (9) zum Aufmodulieren dieser Signale auf eine Trägerfrequenz, der Verstärker (22) zur Anpassung des beim Empfänger notwendigen Eingangspegels für ein Optimales Korrelatorergebnis und der Netzkoppler (10) zur Einspeisung des gespreizten und richtungskodierten Datenstromes in die Niederspannungsleitung (2) zur Weiterleitung an die Signalaufbereitungseinheit (7) oder die Netzübergangseinheit (8) vorgesehen ist.

19. Anordnung nach einem der Ansprüche 16 bis 18,
**dadurch gekennzeichnet,**
**daß** der Aufbau der Signalaufbereitungseinheit (7) im wesentlichen dem des Nutzerendgerätes (6) entspricht, wobei die Signalverarbeitungseinheiten und ggf. Teile der Taktversorgungseinheit und der Synchronisationseinrichtung entsprechend der Anzahl der zu regenerierenden Kanäle multipliziert mit der Anzahl der Signalrichtungen ausgelegt und die fehlerkorrigierten Signale aus dem Kanaldecoder direkt oder über eine Koppelmatrix (41) in den nächsten Kanalcoder einspeisbar sind, und ein über den Mikroprozessor 831) oder einen kundenspezifischen Schaltkreis verwalteter Wertespeicher (37) zum Ablegen der aktuellen Kanalzuordnungen mit entsprechenden Richtungskennungen, der zu nutzenden Sequenz und weiterer Informationen zur Signalquelle und -senke vorgesehen ist.

20. Anordnung nach Anspruch 19,
**dadurch gekennzeichnet,**
**daß** die Signalaufbereitungseinheit (7) für den Einsatz im Ortsverteilerkasten 83) entsprechend der Anzahl zu versorgender Netzteilabschnitte mit zusätzlichen Netzkbpplern, Modulatoren, Demodulatoren, regelbaren Ausgangs- und Low-Noise-Eingangsverstärkern, Regeleinrichtungen der Sende- und Empfangssignale sowie Frequenzweichen oder -filter ausgelegt ist.

21. Anordnung nach Anspruch 19 und 20,
**dadurch gekennzeichnet,**
**daß** der mit dem Entzerrer oder der Störsignal-Unterdrückungseinheit (24) verbundene CDMA-Prozessor (18) der Signalaufbereitungseinheit (7) empfangsseitig einen Integrator (12) und einen Schwellwertdetektor (13) zur Wiedergewinnung der übertragenden Daten beinhaltet, wobei im CDMA-Prozessor (18) ein Multiplizieren des regenerierten Datensignals mit einer Spreizungssequenz (19) und einer Richtungskennung (20) des zu adressierenden Nutzerendgerätes (6) oder der Signalaufbereitungseinheit (7) vorgesehen ist.

22. Anordnung nach einem der Ansprüche 16 bis 21,
**dadurch gekennzeichnet,**
**daß** der Aufbau der Netzübergangseinheit (8) dem der Signalaufbereitungseinheit (7) entspricht, jedoch die Funktionsgruppen der digitalen Signalverarbeitung (18, 24, 25) und ggf. der Taktversorgung (32) mehrfach, mindestens aber entsprechend der einfachen Anzahl der zur übergeordneten Telekommunikationseinrichtung (48) bereitgestellten Übertragungskanäle zuzüglich der für jede Niederspannungsleitung benötigten Synchronisationskanäle, ausgelegt sind, und Netzkoppler und Frontends zur Niederspannung entsprechend der Anzahl der zu versorgenden Niederspannungsbereiche vorgesehen sind, wobei zur Kanalzuteilung durch Konfiguration der Koppelmatrix (41) und CDMA-Prozessoren ein Mikroprozessorsystem vorgesehen ist.

23. Anordnung nach Anspruch 22,
**gekennzeichnet durch**
die Zuordnung einer Geräteidentifikationskennungseinheit sowie eines Wertespeichers zur Speicherung der Daten aller aktiven Verbindungen, wie Wegeinformation, Kanalzuordnung, Signalqualität, Nutzerendgerätekennung, genutzte Dienste und zugeordneter Übertragungskanal zur übergeordneten Telekommunikationszentrale.

24. Anordnung nach einem der Ansprüche 16 bis 21,
**dadurch gekennzeichnet,**
**daß** die Signalaufbereitungseinheiten (7) in oder in der Nähe von Ortsverteilerkästen (3), Lichtmasten und Hausanschlußkästen untergebracht sind, wobei der Abstand zwischen der Signalaufbereitungseinheiten etwa bei 100 m und in Bereichen starker Dämpfung deutlich darunter liegt.

25. Anordnung nach einem der Ansprüche 16 bis 24,
**dadurch gekennzeichnet,**
**daß** das übergeordnete Telekommunikationsnetz (48) ein Heimatadressenregister (49) und ein Besucherregister (50) zur Verwaltung eines teilmobilen Dienstes, Kontrollregister (61) für die Registrierung der zugelassenen Endgeräte, Überwachungsstationen (52) zur Überwachung des Datenverkehrs mit den Netzübergangs- und den Signalaufbereitungseinheiten (8, 7) in Bezug auf Auslastung, Qualität und Verfügbarkeit, ein Koppelnetz (56) zur Weiterleitung der Gespräche aus dem Niederspannungsnetz (35) zu einer Transitstelle (57) oder der Initialisierungskanäle zum Mikroprozessorsystem (38), einen Server (51) zur Auswahl der kürzesten Übertragungswege (58) zum Teilnehmer und eine Mikroprozessoreinheit (59) zur Festlegung des optimalen Übertragungsweges von der Zentrale zum Teilnehmer umfaßt.

## Claims

1. A data transmission method for two-way communication using low-voltage systems, either with or without a link to a higher order telecommunication, voice, or data network, **characterized in that** transmission within the low-voltage system takes place at a high-frequency range above 148.5 kHz using band spreading of data signals and a transmit level below the interference or noise voltage limit of line and radio disturbance characteristics applicable to the method described, and **in that** said signals that are spread over a frequency band or time range using different sequences of one or several families of numeric values to enable multiple-channel operation are given a direction coding, frequency or time slot assignment to specify a receiver-specific logical direction within the low-voltage system, said binary data sequences spread in a channel-specific way within the low-voltage system being identified, regenerated, and reassigned new direction codes for forwarding based on the specified sequences using correlation, iterative, or parallel fault signal suppression methods or time/frequency transformation depending on attenuation.

2. The method according to claim 1, **characterized in that** a Fast-Fourier transformation is used for time/frequency transformation.

3. The method according to claim 1, **characterized in that** a Fast-Hadamard transformation is used for time/frequency transformation.

4. The method according to claim 1, **characterized in that** a combination of a Fast-Fourier and a Fast-Hadamard transformation is used for time/frequency transformation.

5. The method according to one of the preceding claims 1 through 4, **characterized in that** a distinction is made between communication only within a low-voltage system or via a telecommunication, voice, or data network linked to it.

6. The method according to one of the preceding claims 1 through 5, **characterized in that** the useful signals in the signal received are identified by the joint detection method.

7. The method according to claim 1, **characterized in that** the channel-specific band spreading of the data signals is carried out using one or several matched families of number sequences such as Gold, Walsh, or Hadamard sequences.

8. The method according to claim 7, **characterized in that** adjacent families of number sequences do not contain similar sequences to prevent mutual interference of users located in different network areas.

9. The method according to one of the preceding claims 1 through 8, **characterized in that** the data stream is multiplied by a Walsh sequence after band spreading using the direct sequencing method to give the data stream a logical direction in the low-voltage system.

10. The method according to claim 9, **characterized in that** the length of the Walsh sequences used for direction coding is smaller than the band spreading sequences used.

11. The method according to one of the preceding claims 1 through 8, **characterized in that** the logical direction of the data stream in the low-voltage system is identified by controlled and structured assignment of select families of number sequences to individual network areas that are enclosed by two repeater units or by one repeater unit and a network interworking unit.

12. The method according to one of the preceding claims 1 through 8, **characterized in that** directions are separated using time or frequency multiplexing and that the band-spread signals are transmitted in the transmit and receive directions on separate time slots or frequency bands.

13. The method according to claims 1 through 12, **characterized in that** the transmit levels of each transmitting unit in a network area are set in such a way that all overlaid signals of one frequency comprise nearly the same level at the receivers of the repeater or the network interworking unit in the controlled period.

14. The method according to claims 1 through 8, **characterized in that** prior to the actual data transfer, an initializing phase is provided in which an initializing sequence plus the ID of the respective user and of the user terminal and a logon sequence are output, and a spread sequence is subsequently assigned to the respective user.

15. The method according to claim 9, **characterized in that** the IDs of the respective user and the user terminal are checked for device approval of the terminal and communication authorization of said user in the higher order telecommunication network after sending out the initialization sequence.

16. An arrangement for carrying out the method according any one of the preceding claims 1 through 15 consisting of a low-voltage system, users connected to it via user terminals, local line distributor boxes and network stations, and a higher order telecommunication network connected to said low-voltage system, **characterized in that** network interworking units (8) are assigned to the network stations (1) to connect the low-voltage system and the higher-order telecommunication network (48) and for channel assignment in the respective transmission medium, and that repeater units (7) are placed at specific distances within the low-voltage system, said units being designed for regenerating and direction-specific forwarding of the data signals to a downstream repeater unit or a user terminal (6) or a network interworking unit (8).

17. The arrangement according to claim 16,**characterized in that** the user terminal (6) is associated with the following functional units: physical coupler (10), frequency separator or filter (34), controllable low-noise input amplifier (23), IQ demodulator (11), modulator (9), controllable output amplifier (22), equalizer or fault signal suppressing unit (24), CDMA processor (18), channel encoder/decoder (25), voice/data multiplexer (26), voice and operating interface (27), data interface (28), SIM (subscriber identity module) (30), device identification unit (29), microprocessor (31), central clock generating unit (32), synchronization facility (33), emergency power supply unit or power supply unit (35) and controllers for controlling the input and output levels.

18. The arrangement according to claim 17, **characterized in that** a CDMA processor (18) is provided for spreading the data and adding the direction code using its allocated spread sequence, a modulator (9) for modulating the signals onto a carrier frequency, an amplifier (22) to adjust the input level required at the receiving end for optimum correlator performance, and a physical coupler (10) for feeding the spread and direction-coded data stream into the low-voltage line (2) and forwarding it to the repeater unit (7) or network interworking unit (8).

19. The arrangement according to any one of the preceding claims 16 through 18, **characterized in that** the layout of the repeater unit (7) is basically similar to that of the user terminal (6) but the repeater units and possibly parts of the clock generating unit and the synchronization unit may optionally be configured in accordance with the number of channels to be regenerated multiplied by the number of signaling directions, and the error-corrected data signals are fed from the channel decoder into the next channel encoder either directly or via a switching matrix (41), and **in that** a value memory (37) managed by the microprocessor (31) or a customer-specific circuit is provided in which the current channel assignments and the associated direction codes and sequence to be used as well as other signal source and sink information are stored.

20. The arrangement according to claim 19, **characterized in that** the repeater unit (7) is designed for use in local distributor boxes (3) and comprises additional physical couplers, modulators, demodulators, controllable output and low-noise input amplifiers, controlling facilities for transmit and receive signals and frequency separators or filters depending on the number of network areas to be covered.

21. The arrangement according to claims 19 and 20, **characterized in that** the CDMA processor (18) of the repeater unit (7) that is connected to an equalizer or fault signal suppressing unit (24) on its receive side comprises an integrator (12) and a threshold detector (13) for retrieving the data transmitted, and that the regenerated data signal is multiplied with a spread sequence (19) in said CDMA processor (18) and a direction code (20) of the user terminal (6) to be addressed or the repeater unit (7).

22. The arrangement according to one of the preceding claims 16 through 21, **characterized in that** the layout of the network interworking unit (8) is basically similar to that of the repeater unit (7) but that the functional groups of digital signal processing (18, 24, 25) and possibly the clock generator (32) are configured as multiple units, at least in accordance with the simple number of transmission channels provided to the higher order telecommunication facility (48) plus the number of synchronization channels required for each low-voltage line, and that physical couplers and front ends to low voltage are provided in accordance with the number of low-voltage areas to be covered, and **in that** a microprocessor system is provided for channel assignment and configuration of the switching matrix (41) and CDMA processors.

23. The arrangement according to claim 22, **characterized in that** a device ID unit and a value memory for storing the data of all active connections consisting of routing information, channel assignment, signal quality, user terminal ID, services used, and the assigned transmission channel, are assigned to the higher order telecommunication switching center.

24. The arrangement according to one of the preceding claims 16 through 21, **characterized in that** the repeater units (7) are placed in or close to local line distributor boxes (3), lamp posts, and house connection boxes the distance between repeater units being about 100 m or considerably smaller in areas of great attenuation.

25. The arrangement according to one of claims 16 through 24, **characterized in that** the higher order telecommunication network (48) includes a home location register (49) and a visitor location register (50) for managing a partly mobile service, a check register (60) for subscriber authorization, a check register (61) for registration of approved terminals, monitoring stations (52) for monitoring data exchange of network interworking and repeater units (8, 7) as regards traffic load, quality and availability, a switching network (56) for forwarding calls from the low-voltage system to a transit point (57) or the initialization channels to the microprocessor system (38), a server (51) for selecting the shortest routes (58) to the subscriber, and a microprocessor unit (59) for determining the optimum route from the switching center to the subscriber.

## Revendications

1. Procédé de transfert de données dans une communication bidirectionnelle sur des réseaux basse tension, avec ou sans couplage à un réseau vocal, de données ou de télécommunication situé en amont, **caractérisé en ce que** le transfert dans le réseau basse tension est effectué dans une plage de hautes fréquences supérieure à 148,5 kHz avec un étalage de la bande des signaux de données et un niveau d'émission inférieur aux limites des tensions de parasite-perturbation en ligne à utiliser sur le procédé décrit et **en ce que** les signaux étalés en vue de garantir une structure multicanaux avec différentes séquences d'une ou plusieurs familles de valeurs numériques dans le domaine fréquentiel et/ou temporel sont dotés d'un codage directionnel, d'une distribution fréquentielle ou d'une distribution dans une fenêtre temporelle en vue de prédéterminer un sens logique spécifique au récepteur dans le réseau basse tension, les séries de données binaires étalées de façon spécifique aux canaux étant détectées, régénérées et évaluées avec un nouveau code de sens pour la transmission des signaux, dans le réseau basse tension en fonction du degré d'affaiblissement à l'aide des séquences prédéterminées par corrélation, par des procédés d'élimination de signaux parasites itératifs ou parallèles ou par une transformation temps/fréquence.

2. Procédé selon la revendication 1, **caractérisé en ce que** la transformation temps/fréquence est une transformation de Fourier rapide.

3. Procédé selon la revendication 1, **caractérisé en ce que** la transformation temps/fréquence est une transformation de Hadamard rapide.

4. Procédé selon la revendication 1, **caractérisé en ce que** la transformation temps/fréquence est une combinaison d'une transformation de Fourier rapide et d'une transformation de Hadamard rapide.

5. Procédé selon l'une des revendications 1 à 4, **caractérisé en ce que** l'on fait une différence entre une communication effectuée seulement à l'intérieur d'un réseau basse tension et une communication effectuée via un réseau vocal, de données ou de télécommunication couplé.

6. Procédé selon l'une des revendications 1 à 5, **caractérisé en ce que** les signaux utiles sont détectés dans le signal reçu par le procédé Joint-Detection.

7. Procédé selon la revendication 1, **caractérisé en ce que** l'étalement dans la bande, de façon spécifique aux canaux, des signaux de données est effectué avec des séquences d'une ou plusieurs familles déterminées de suites de nombres, comme par exemple les suites de Gold ou de Walsh-Hadamard.

8. Procédé selon la revendication 7, **caractérisé en ce que** des familles de suites de nombres adjacentes ne contiennent aucune séquence similaire afin d'éviter que des utilisateurs situés dans différentes sous-régions du réseau se parasitent mutuellement.

9. Procédé selon l'une des revendications 1 à 8, **caractérisé en ce que** la prédétermination du sens logique du flux de données dans le réseau basse tension est réalisée après étalement dans la bande par une technique séquentielle directe consistant à multiplier le flux de données par une suite de Walsh.

10. Procédé selon la revendication 9, **caractérisé en ce que** la longueur des suites de Walsh prévues pour le codage du sens est inférieure aux séquences d'étalement dans la bande utilisées.

11. Procédé selon l'une des revendications 1 à 8, **caractérisé en ce que** la prédétermination du sens logique du flux de données dans le réseau basse tension est effectuée en associant de façon appropriée et structurée des familles de suites de nombres sélectionnées à des sous-régions distinctes du réseau qui sont enfermées par deux unités de régénération de signal ou par une unité de transfert de réseau et une unité de transfert de signal.

12. Procédé selon l'une des revendications 1 à 8, **caractérisé en ce que** le transfert des signaux à bande étalée est effectué dans le sens de l'émission ou de la réception par bandes de fréquences ou intervalles de temps séparés en vue séparer les sens dans un procédé multiplexe temporel ou fréquentiel.

13. Procédé selon l'une des revendications 1 à 12, **caractérisé en ce que** les niveaux d'émission des unités d'émission distinctes d'une sous-région du réseau sont réglés de telle sorte que, au niveau des récepteurs des unités de régénération de signal ou des unités de transfert de signal, tous les signaux d'une fréquence qui se chevauchent dans l'intervalle de temps contrôlé ont à peu près le même niveau.

14. Procédé selon l'une des revendications 1 à 8, **caractérisé en ce qu'**il est prévu avant le transfert des données proprement dit une phase d'initialisation en envoyant une séquence d'initialisation, avec un numéro d'identification de l'utilisateur correspondant et du terminal utilisateur, et une séquence d'enregistrement ainsi qu'une assignation subséquente d'une séquence d'étalement à l'utilisateur correspondant.

15. Procédé selon la revendication 9, **caractérisé en ce que** les caractéristiques d'identification de l'utilisateur correspondant et du terminal utilisateur sont vérifiées après avoir envoyé la séquence d'initialisation dans le réseau de télécommunication amont en vue de valider le terminal utilisateur et d'autoriser l'utilisateur à communiquer.

16. Dispositif de mise en oeuvre du procédé selon l'une des revendications 1 à 15, constitué par un réseau basse tension auquel sont raccordés des utilisateurs au moyen de terminaux utilisateurs, de boîtiers répartiteurs locaux et de stations de réseaux ainsi que d'un réseau de télécommunication en amont du réseau basse tension,
**caractérisé en ce que** des unités de transfert de réseau (8) sont associées aux stations de réseau (1) en tant qu'élément de connexion entre le réseau basse tension et le réseau de télécommunication amont (48) et en vue de l'occupation des canaux dans l'autre support de transfert de données et **en ce qu'**il est prévu des unités de régénération de signal (7) à des distances déterminées dans le réseau basse tension en vue de régénérer les signaux de données et de les transmettre de façon spécifique au sens à une unité de régénération de signal ou à un terminal utilisateur (6) ou à une unité de transfert de réseau (8) qui suit.

17. Dispositif selon la revendication 16, **caractérisé en ce qu'**il est associé au terminal utilisateur (6) les unités fonctionnelles suivantes : un coupleur de réseau (10), un diviseur de fréquence ou filtre (34), un amplificateur d'entrée faible bruit réglable (23), un démodulateur IQ (11), un modulateur (9), un amplificateur de sortie réglable (22), un égaliseur ou une unité d'élimination de signaux parasites (24), un processeur CDMA (18), un codeur (décodeur) de canaux (25), un démultiplexeur vocal ou de données (26), une interface vocal ou de commande (27), une interface de données (28), un SIM (module d'identité d'abonné) (30), une unité d'identification d'appareil (29), un microprocesseur (31), une unité de synchronisation centrale (33), une unité d'alimentation d'urgence ou une unité d'alimentation (35) ainsi que des dispositifs de régulation pour réguler le niveau de réception ou d'émission.

18. Dispositif selon la revendication 17, **caractérisé en ce que** le processeur CDMA (18) est destiné à étaler les données et à enregistrer un code de sens avec cette séquence d'étalement associée, le modulateur (9) est destiné à moduler ces signaux sur une fréquence porteuse, l'amplificateur (22) est destiné à adapter le niveau d'entrée nécessaire sur le récepteur afin d'obtenir une corrélation optimale et le coupleur de réseau (10) est destiné à introduire le flux de données étalé et codé pour le sens sur la ligne basse tension (2) afin de les transmettre à l'unité de régénération de signal (7) ou l'unité de transfert de réseau (8).

19. Dispositif selon l'une des revendications 16 à 18, **caractérisé en ce que** la structure de l'unité de régénération de signal (7) correspond sensiblement à celui du terminal utilisateur (6), les unités de traitement de signal et le cas échéant des parties de l'unité de synchronisation et du dispositif de synchronisation étant élaborées en fonction du nombre de canaux à régénérer multiplié par le nombre de sens de signaux et les signaux corrigés des erreurs en sortie du décodeur de canaux pouvant être transmis directement ou via une matrice de couplage (41) dans le codeur de canaux suivant, et une mémoire de valeurs (37) gérée par le microprocesseur (31) ou un circuit spécifique au client étant prévue pour stocker les affectations de canaux en cours avec des codes de sens correspondants, la séquence à utiliser et d'autres informations destinées à l'émission de signal ou à la source.

20. Dispositif selon la revendication 19, **caractérisé en ce que** l'unité de régénération de signal (7) destiné à l'utilisation dans le boîtier répartiteur local (3) est élabore en fonction du nombre de sous-ensemble de réseau à alimenter dotés en plus de coupleurs de réseau, de modulateurs, de démodulateurs, d'amplificateurs d'entrée faible bruit ou de sortie, de dispositifs de régulation des signaux d'émission et de réception ainsi que de diviseurs de fréquence ou de filtres.

21. Dispositif selon la revendication 19 ou 20, **caractérisé en ce que** le processeur CDMA (18), relié à l'égaliseur ou à l'unité d'élimination de signaux parasites (24), de l'unité de régénération de signal (7) contient du côté de la réception un intégrateur (12) et un détecteur de valeur de seuil (13) en vue d'extraire les données transférées, une multiplication du signal de données régénéré avec une séquence d'étalement (19) et un code de sens (20) du terminal à adresser (6) ou de l'unité de régénération de signal (7) étant prévu dans le processeur CDMA (18).

22. Dispositif selon l'une des revendications 16 à 21, **caractérisé en ce que** la structure de l'unité de transfert de données (8) correspond à celle de l'unité de régénération de signal (7), **en ce que** les groupes fonctionnels du traitement numérique du signal (18, 24, 25) et le cas échéant de la synchronisation (32) sont cependant élaborés de façon répétée, au moins en fonction du simple nombre de canaux de transfert, dont dispose le dispositif de télécommunication amont (48), en plus des canaux de synchronisation nécessités par chaque ligne de basse tension, et **en ce que** des coupleurs de réseau et des bornes de raccordement à la basse tension sont prévus en fonction du nombre de régions basse tension à alimenter, un système à microprocesseur étant prévu pour affecter les canaux en configurant la matrice de couplage (41) et les processeurs CDMA.

23. Dispositif selon la revendication 22, **caractérisé par** l'association au central de télécommunication amont d'une unité de code d'identification d'appareil ainsi qu'une mémoire de valeurs pour mémoriser les données de toutes les connexions actives, comme les informations de cheminement, les affectations des canaux, la qualité du signal, le code de terminal utilisateur, les services utilisés et le canal de transfert associé.

24. Dispositif selon l'une des revendications 16 à 21, **caractérisé en ce que** les unités de régénération de signal (7) sont placées dans des boîtiers répartiteurs locaux (3) des réverbères et des boîtiers de raccordement domestiques, ou à proximité de ceux-ci, la distance entre les unités de régénération de signal étant de 100 m environ et nettement moins dans des zones de fort affaiblissement.

25. Dispositif selon l'une des revendications 16 à 24, **caractérisé en ce que** le réseau de télécommunication (48) amont comporte un registre d'adresses principal (49) et un registre de visiteurs (50) destinés à gérer un service partiellement mobile, un registre de contrôle (61) destiné à l'enregistrement des terminaux autorisés, des stations de surveillance (52) destinés à surveiller la circulation des données avec les unités de transfert de réseau et de régénération de signal (8, 7) quant à l'utilisation maximale, la qualité ou la disponibilité, un réseau de couplage (56) destiné à transmettre les conversations du réseau basse tension (35) à un emplacement de transit (57) ou des canaux d'initialisation au système à microprocesseur (38), un serveur (51) destiné à sélectionner les chemins de transfert (58) les plus courts vers l'abonné ou une unité à microprocesseur (59) destinée à déterminer le chemin de transfert optimal du central à l'abonné.
